# EUROPEAN PATENT APPLICATION

(11) **EP 0 587 416 A2**
(43) Date of publication of application: **16.03.1994**
(21) Application number: 93307069.0
(22) Date of filing: 08.09.1993
(51) Int. Cl.: G11B 27/34, G11B 27/11, G11B 27/30, H04N 5/76

(54) **Image reproducing display apparatus and recording medium therefor**

(30) Priority: 08.09.1992 JP 239158/92
(71) Applicant: PIONEER ELECTRONIC CORPORATION, Meguro-ku Tokyo 153 (JP)
(72) Inventor: Fujimoto, Hideki, c/o Pioneer Ohmori Plant, Tokyo (JP); Ichida, Michio, c/o Pioneer Ohmori Plant, Tokyo (JP); Matsunami, Yoshiro, c/o Pioneer Ohmori Plant, Tokyo (JP); Kajiya, Toshiaki, c/o Pioneer Ohmori Plant, Tokyo (JP); Kimura, Takahiro, c/o Pioneer Ohmori Plant, Tokyo (JP)
(74) Representative: Tomlinson, Kerry John

(57) **Abstract**

An image reproducing display apparatus (1) can automatically display a title list image plane or the like even when no title list image plane regarding image data recorded on a recording medium (2A) has been recorded on the recording medium (2A). The recording starting position of one or a plurality of externally designated image data pieces is detected. The recording position of the image plane data to be reproduced after the lapse of a previously set time period if the reproduction is performed from the detected recording starting position is detected. The image plane data of an image plane from one or a plurality of these detected recording positions is respectively reproduced as display image plane data. The reproduced display image plane data is stored in a memory. The corresponding title list image plane is displayed on a display screen of the display device on the basis of the display image plane data stored in the memory.

## Description

The present invention relates to an image reproducing display apparatus and a recording medium, and more particularly, but not exclusively, to an image reproducing display apparatus and a recording medium which are suitable for use in a Karaoke apparatus using a recording medium which can be accessed randomly.

Hitherto, an LD Karaoke apparatus using a laser vision disk (hereinafter, referred to as LD) is known as a Karaoke capable of image reproduction.

In conventional LDs, usually no particular information about the music pieces contained therein such as their titles is recorded. This has resulted in the inability to automatically display the titles of music. pieces in LD karaoke apparatuses. It is, therefore, usual for the user to select a desired music piece according to the content printed on the jacket or the like enclosing an LD.

To solve such a drawback, there has been proposed an LD Karaoke apparatus arranged such that a title list image plane which shows the titles of all of the music pieces contained in the LD is recorded on the LD so that the user can select the music piece to be reproduced by consulting such a title list image plane (Japanese Patent Kokai No. hei 2-81386).

The title list image plane of this example is configured such that the image plane displaying the titles of the music pieces contained in an LD is reduced in size and a plurality of title image planes are displayed in one image plane. Therefore, by displaying the title list image plane in combination with music piece number information, selection operation or the like for the user can be facilitated.

At present, however, LDs on which the title list image plane has been recorded are unusual, and in general no title list image plane is recorded on the LDs.

In the case of the method of using a conventional LD on which a title list image plane is recorded previously, there arises a problem in that, in reproducing an ordinary LD, i.e. an LD on which no title list image plane is recorded, the title list image plane cannot be displayed and the handling of the apparatus is not easy enough.

It is a first object of the present invention to provide an image reproducing display apparatus which can automatically display a title list image plane by an easy operation of the user even when a title list image plane is not recorded previously.

A second object of the invention is to provide a recording medium and its image reproducing display apparatus which can automatically produce a title list image plane.

To solve the above problems, according to a first aspect of the invention, there is provided an image reproducing display apparatus for reproducing and displaying image data from a randomly accessible recording medium on which a plurality of image data pieces each comprising a plurality of image plane data pieces are recorded, wherein the apparatus comprises: starting position detection means for detecting a recording starting position of one or a plurality of image data designated from the outside; recording position detection means for detecting a recording position of image plane data to be reproduced after the lapse of a previously set time period if the reproduction is performed from said detected recording starting position; reproducing means for respectively reproducing the image plane data of one image plane as display image plane data from one or a plurality of detected recording positions; memory means for storing the reproduced display image plane data; display means for executing display operations on the basis of the image plane data; and display control means for displaying the corresponding image plane in a display screen of the display means on the basis of one or a plurality of display image plane data stored in the memory means.

According to a second aspect of the invention, there is provided an image reproducing display apparatus for reproducing and displaying image data from a randomly accessible recording medium on which a plurality of image data each comprising a plurality of image plane data pieces are recorded, comprising: starting position detection means for detecting a recording starting position of the one image data designated from the outside; timing setting means each for setting a plurality of reproduction timing periods corresponding to the elapsed times in the ordinary reproducing mode from the recording starting positions on the basis of a command from the outside; recording position detection means for respectively detecting the recording position on the recording medium of the image plane data to be reproduced after the lapse of the reproduction timing periods if the reproduction is performed from the detected recording starting position; reproducing means for respectively reproducing the image plane data of one image plane as display image plane data from the plurality of detected recording positions; memory means for storing the reproduced display image plane data; display means for performing various kinds of displays on the basis of the image plane data; and display control means for dividing a display screen of the display means on the basis of the plurality of display image plane data stored in the memory means, and for simultaneously reducing and displaying a plurality of image planes corresponding to the plurality of display image plane data in the display screen of the display means.

According to a third aspect of the invention, there is provided a randomly accessible recording medium on which a plurality of image data pieces each comprising a plurality of image plane data pieces are recorded, wherein among the plurality of image plane data, extraction image plane data indicative of the recording position(s) of one or a plurality of image plane data to be extracted and displayed is previously recorded.

According to a fourth aspect of the invention, there is provided an image reproducing display apparatus for reproducing the recording medium according to the third feature of the invention and for displaying, wherein the apparatus comprises: reproducing means for respectively reproducing image plane data of one image plane as display image plane data from a recording position based on the extracted image plane data; memory means for storing the reproduced display image plane data; display means for performing various kinds of displays on the basis of the image plane data; and display control means for displaying the corresponding image plane in the display screen of the display means on the basis of one or a plurality of display image plane data stored in the memory means.

According to the first aspect of the invention, the starting position detection means detects the recording starting position(s) of one or a plurality of image data designated from the outside, and when the reproduction is executed from the detected recording starting position, the recording position detection means detects the recording position of the image plane data to be reproduced after the lapse of a previously set time period.

The reproducing means comprising a pickup, a decoder, and the like, therefore, respectively reproduces the image plane data of one image plane as display image plane data from one or a plurality of detected recording positions, and the memory means such as a memory or the like stores the reproduced display image plane data.

The display control means, thus, displays the corresponding image plane in the display screen of the display means on the basis of one or a plurality of display image plane data stored in the memory means.

For instance, in case of reproducing an LD for Karaoke, therefore, the title (music title display) image plane or a words display image plane can be easily automatically displayed by the previously set time period.

According to the second aspect of the invention, the timing setting means sets a plurality of reproduction timing periods corresponding to the elapsed times in the ordinary reproducing mode from the recording starting positions on the basis of a command signal from the outside, and the starting position detection means detects the recording starting position of one image data designated from the outside. If the reproduction is performed from the detected recording starting position detected, accordingly, the recording position detection means detects the recording positions on the recording medium of the image plane data to be reproduced after the lapse of the reproduction timing periods.

The reproducing means respectively reproduces the image plane data of one image plane from a plurality of detected recording positions, and the memory means stores the reproduced display image plane data.

The display control means, consequently, divides the display screen of the display means on the basis of the plurality of display image plane data stored in the memory means and simultaneously reduces and displays a plurality of image planes corresponding to the plurality of display image plane data in the display screen of the display means.

It is, therefore, possible to simultaneously display the image planes at a plurality of arbitrary recording positions of one image data.

According to the third aspect of the invention, since the extraction image plane data indicative of the recording position(s) of one or a plurality of image plane data to be extracted and displayed among a plurality of image plane data has been recorded on the recording medium, by obtaining the recording position of the image plane data on the basis of the extraction image plane data, the corresponding image plane can be easily displayed.

According to the fourth aspect of the invention, the image plane data of one image plane is respectively reproduced as display image plane data from the recording position based on the extraction image plane data, and the memory means stores the reproduced display image plane data.

The display control means, consequently, displays the corresponding image plane in the display screen of the display means on the basis of one or a plurality of display image plane data stored in the memory means.

Desired image plane data, therefore, can be automatically displayed on the basis of the extraction image plane data.

Embodiments of the present invention will now be described, by way of example only, with reference to the accompanying drawings, in which:
Fig. 1 is a block diagram showing a schematic construction of a Karaoke apparatus of a first embodiment;
Fig. 2 is an explanatory diagram of a recording state of an LD;
Figs. 3A and 3B are schematic explanatory diagrams of a recording state of the LD of the first embodiment;
Fig. 4 is an operation flowchart of the first embodiment;
Fig. 5 is an explanatory diagram (1) of a display state;
Fig. 6 is an explanatory diagram (2) of a display state;
Fig. 7 is an explanatory diagram (3) of a display state;
Fig. 8 is an explanatory diagram (4) of a display state;
Fig. 9 is an explanatory diagram (5) of a display state;
Fig. 10 is an explanatory diagram (6) of a display state; and
Figs. 11A and 11B are schematic explanatory diagrams of a recording state of an LD according to a second embodiment.

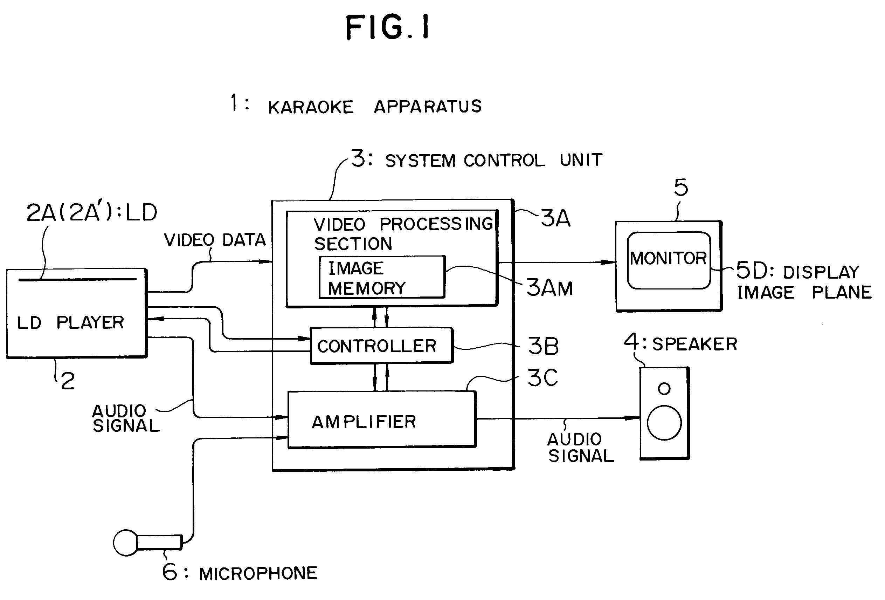

Fig. 1 is a block diagram showing a schematic construction of a Karaoke apparatus of a first embodiment.

A Karaoke apparatus 1 comprises: an LD player 2 for reproducing an LD 2A and generating video data and an audio signal; a system control unit 3 for controlling the whole Karaoke apparatus 1; a speaker 4 for converting the audio signal from the system control unit 3 and generating an acoustic vibration; and a monitor 5 to display an image plane on the basis of a video signal from the system control unit 3.

The system control unit 3 comprises: a video processing section 3A for executing various kinds of video processing controls such as image memory control, sub-image plane display control, multi-image plane (multi-screen) display control, superimpose display control, and the like, which will be explained hereinafter, on the basis of the video data from the LD player 2; a controller 3B for controlling the whole system control unit 3; and an amplifier 3C for mixing the audio signals from the LD player 2 and a microphone 6, amplifying, and supplying the amplified mixed audio signal to the speaker 4.

The system control unit 3 has an input section (not shown) for inputting various kinds of data and for operating. The video processing section 3A has an image memory 3A_{M} to temporarily store the video data from the LD player 2.

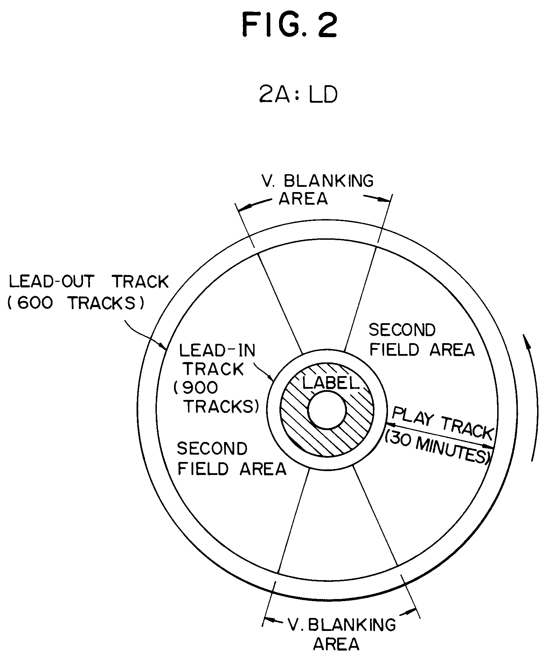

A recording state of the LD 2A will now be described with reference to Fig. 2.

There are two kinds of LD disk: a disk of the CAV (Constant Angular Velocity) type - a standard disk; and a disk of the CLV (Constant Linear Velocity) type - a long-play disk. Explanation will be made hereinbelow with respect to the CAV type disk.

The disk of the CAV type LD is rotated at a constant velocity of 1800 r.p.m. and one image plane (one frame) has been recorded per rotation on the disk, so that a total 54000 frames can be reproduced for 30 minutes per side. More specifically, 900 lead-in tracks are formed in the inner peripheral portion of the LD 2A and 600 lead-out tracks are formed in the outer peripheral portion. A play track in which video data and audio data corresponding to the reproducing time of 30 minutes are recorded is provided in the intermediate portion between the lead-in tracks and the lead-out tracks. One play track is constructed by: two vertical blanking areas; a first field area; and a second field area. Information recorded in the first and second field areas in one play track is set into one group and constructs the video data and the audio data of one frame.

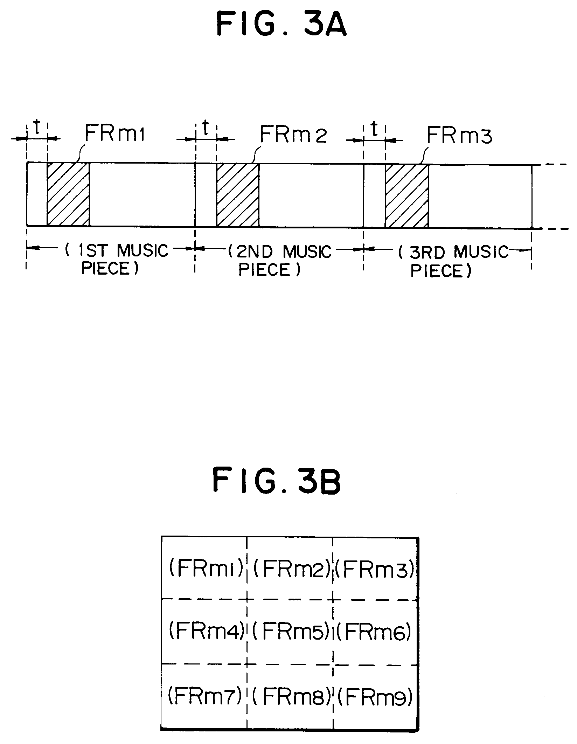

The operation will now be described with reference to Figs. 3 to 10.

The fundamental operation in the case where a plurality of title (music title) display image planes of the recorded music pieces are simultaneously displayed as a display image plane in a display screen of a monitor will be first described with reference to Figs. 3A and 3B.

As schematically shown in Fig. 3A, a plurality of music pieces are continuously recorded on the LD 2A from the inner periphery toward the outer periphery. In the first embodiment, one image plane of the image plane (frame) recorded at the position corresponding to a time point of the lapse of a predetermined time t from the recording starting position of a certain recorded music piece on the LD 2A when it is measured as an ordinary reproducing time is displayed on the screen. Or, a plurality of image planes (frames) recorded at positions corresponding to time points of the lapse of the predetermined time t from the recording starting positions of a plurality of recorded music pieces on the LD 2A when they are measured as ordinary reproducing times are simultaneously displayed on the screen.

A title display image plane of each recorded music piece has been recorded in the head portion of each recorded music piece on an ordinary LD for Karaoke for a few seconds. Practically speaking, in many cases, the title display image plane is recorded from the recording starting position of each recorded music piece for a period of time from about 1 to 5 seconds when it is measured as a reproducing time. In the embodiment, therefore, by sending a command to the controller 3B through the operation of an input section (not shown), the above predetermined time t is set, for example, to be three seconds. A plurality of image planes (frames) recorded at the positions corresponding to the lapse of time of three seconds from the recording starting positions of a plurality of recorded music pieces when they are measured as ordinary reproducing times are simultaneously displayed on the screen.

Specifically, as shown in Fig. 3A, with respect to the recorded music pieces, nine image planes FRₘ₁, FRₘ₂, FRₘ₃, ---, and FRₘ₉ recorded at the positions corresponding to the lapse of time of three seconds when they are measured as ordinary reproducing times as shown in Fig. 3A are simultaneously displayed on one display screen as shown in Fig. 3B.

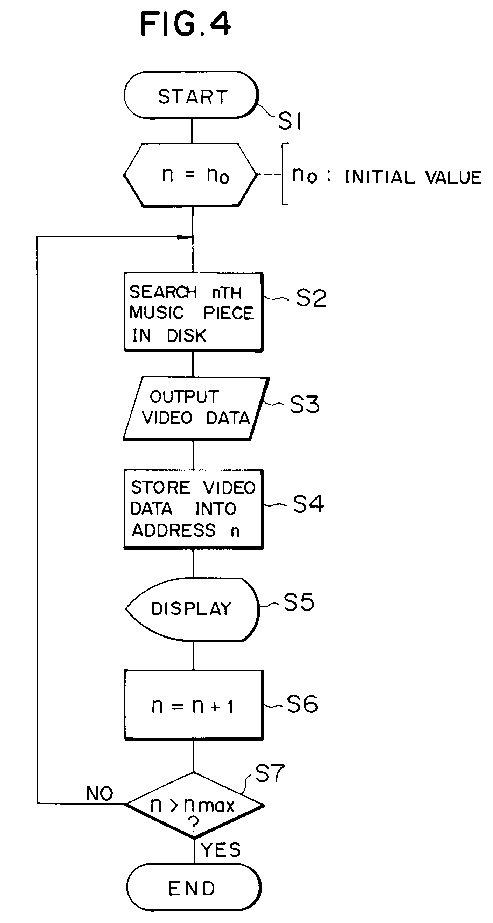

The more detailed display operation will now be described with reference to Figs. 4 to 10. In this case, the maximum number of display image planes is set to nₘₐₓ.

First, the image plane number n assumes an image plane number initial value n₀ (step S1). Generally, the image plane initial value n₀ = 1.

Subsequently, the recording starting position of the nth music piece on the LD is searched for. The recording position at which the image plane (frame) after the lapse of time t (t = 3 seconds) from the recording starting position when it is measured as a reproducing time is searched for (step S2).

After the completion of the searching operation, the video data of one image plane (frame) recorded at the recording position is provided by the LD player 2 (step S3) and stored into a predetermined memory area (address n) in the image memory 3A_{M}(step S4).

After the video data has been stored in the image memory 3A_{M}, the controller 3B allows the video data to be generated and displayed as a reduced image plane into a predetermined area of the monitor (step S5). In this instance, as necessary, the number (for example, music piece number) or the like to specify the reduced image plane is generated into a part of the reduced image plane by a character generator (not shown) and can also be superimposed and displayed.

"1" is added to n (step S6) and a check is made to see if the value of n is larger than nₘₐₓ or not (step S7).

In the judgment in step S7, when n is larger than nₘₐₓ, the processing routine is finished. When n is equal to or less than nₘₐₓ, the processing routine is again returned to step S2 and the processing operations in steps S2 to S7 are repeated.

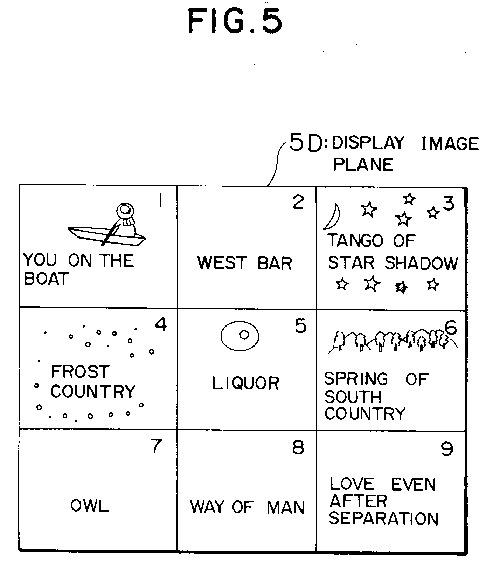

A specific display example is shown in Fig. 5.

A display image plane 5D of the monitor 5 is divided into nine small image planes. A title display image plane is displayed on each of the reduced image planes and the music piece number (from 1 to 9) of the relevant music piece is displayed in the right upper portion.

The user, therefore, can easily know the recorded music piece on the LD 2A to be reproduced and can select a desired music piece on the basis of the small image planes.

By providing a touch panel or a like existing technique for such a displayed monitor display and by controlling music selection, the operation is further made easy and convenient.

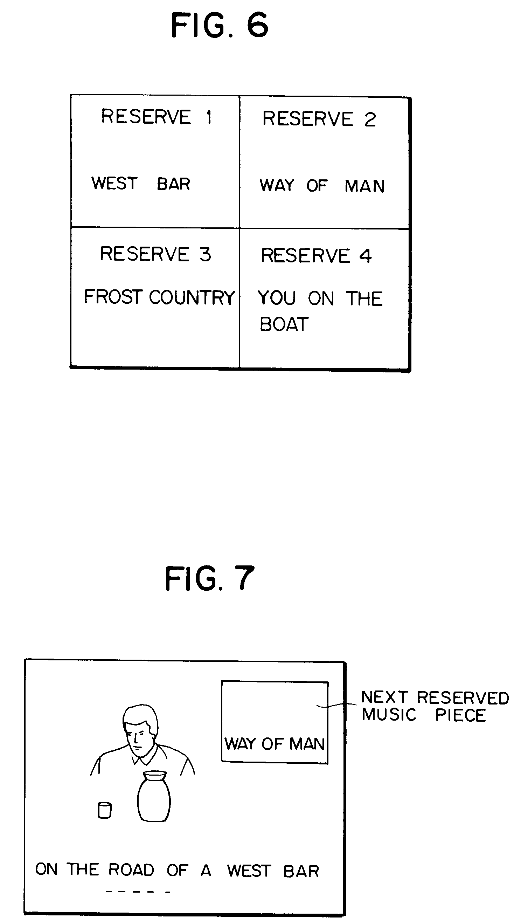

In a Karaoke apparatus which can reserve and reproduce a plurality of music pieces, on the other hand, as shown in Fig. 6, the apparatus can also be constructed so as to sequentially display the title image planes in accordance with the reservation. In such a case, as a number to specify the reduced image plane, the reservation number is displayed in a part of each of the reduced image planes.

It is also possible to construct the apparatus in a manner such that the title display image plane of the next reserved music piece is previously stored into the image memory 3A_{M} and, as shown in Fig. 7, a sub-image plane is displayed in a part of the image plane (animation display) which is at present being reproduced and the title image plane of the next reserved music piece is displayed in the relevant sub-image plane.

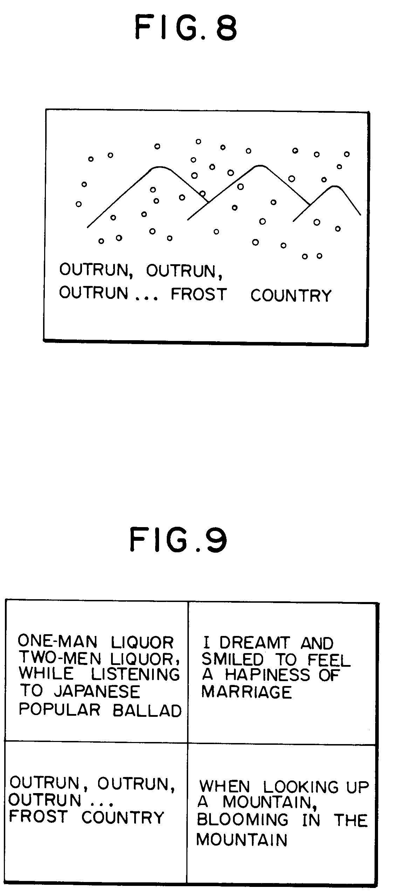

Furthermore, by setting the predetermined time t to a time longer than that when displaying the title image plane, as shown in Fig. 8, a words image plane can also be displayed at an arbitrary recording position. Such a display method can also be used in attractions such as a quiz to find out the title or the like. Similarly, as shown in Fig. 9, words display image planes of a plurality of music pieces can also be simultaneously displayed as reduced image planes.

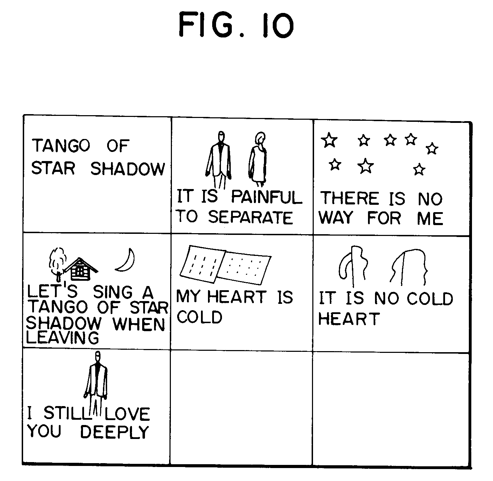

By further constructing the apparatus in a manner such that image planes to be stored can be manually instructed by the input section (not shown) of the system control section in the normal reproducing mode or fast forward reproducing mode or the like, as shown in Fig. 10, words of a song of a certain music piece can also be displayed in a lump by using reduced image planes. As an application example of the construction shown in Fig. 7, the next words can be also displayed in the sub-image plane. In this case, the recording position on the disc of the words image plane stored previously in the image memory is preliminarily stored and, if the stored recording position coincides with the recording position of the (main) image plane which is at present reproduced in the normal reproducing mode, the next words image plane is displayed in the sub-image plane. With such a method, even when the user forgets the next words of the words portion which is at present being sung, the user can continue to sing calmly. It is very convenient.

According to the first embodiment as described above, even if the title list image plane is not previously recorded on the LD, the title list image can be automatically produced and displayed by an easy operation. Similarly, image planes at arbitrary recording positions of a plurality of recorded music pieces or image planes at a plurality of recording positions of one recorded music piece can be easily displayed as still images on the monitor.

Although the above first embodiment has been constructed so as to store the image plane at a recording position after the lapse of time of a previously set time period, according to a second embodiment, image plane switching information is previously stored in a sub-code of the LD and the image plane is displayed by using such image plane switching information in the reproducing mode.

That is, display data such as recording position data of the title image plane having a construction similar to the TOC data in a CD, switching position data of the words image plane, and the like is previously recorded on the LD by using subcodes R to W. On the basis of the display data, reproduction and the storage into the image memory are executed, and the display of the title image plane, the display of the words, the display of all of the words, and the like in the first embodiment can be automatically easily executed as a whole.

A practical embodiment will now be described. In this instance, the case of displaying all of the words will now be explained and the apparatus having the construction shown in Fig. 1 is used.

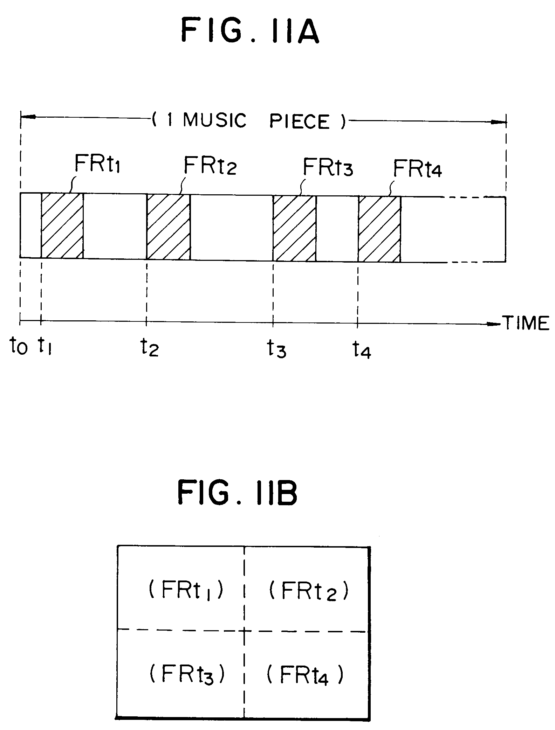

As shown in Fig. 11A, a title display image plane FRₜ₁ is recorded on an LD 2A' at the position corresponding to the lapse of time t₁ from the recording starting position of a certain recorded music piece when it is measured as a reproducing time. The first words display image plane FRₜ₂ is recorded at the position corresponding to the elapse of time t₂. The second words display image plane FRₜ₃ is recorded at the position corresponding to the elapse of time t₃. The third words display image plane FRₜ₄ is recorded at the position corresponding to the lapse of time t₄. The system control unit 3 reproduces a predetermined area of the LD 2A', decodes the sub-codes R to W, obtains the recording positions of the display image planes FRₜ₁ to FRₜ₄, scans each recording position, reproduces the data, and sequentially stores the data in the image memory 3A_{M}.

After completion of the storage into the image memory 3A_{M}, the controller 3B allows the image data to be generated from the image memory 3A_{M} and displayed as a reduced image plane into a predetermined area on the monitor 5 and allows the music piece number or the like to specify the reduced image plane to be superimposed and displayed in a part of the reduced image plane. Fig. 11B shows an example of a reduced display and relates to a case of displaying four divided image planes. Symbols written in parentheses indicate display positions corresponding to the display image planes FRₜ₁ to FRₜ₄.

As described above, according to the second embodiment, all of the words can be automatically displayed.

It is also possible to construct the apparatus in a manner such that the user manually sets the image plane on which each words are displayed in the all-words display mode. For this purpose, for example, by first performing a key input at a scene in which each words appear while executing the normal reproduction, the data of the corresponding time is stored into the memory in the controller 3B.

By storing the data inputted as mentioned above so as to correspond to the data such as TOC data or the like that is peculiar to the disk, when the same disk is reproduced at the next time, the all-words display mode which has been set at the preceding time can be also automatically reconstructed.

Although the above second embodiment has been described with respect to the case of displaying all of the words, by similarly constructing in a manner such that only the title display image plane is scanned and reproduced and stored into the image memory, a title list image plane can be easily formed and displayed. In a manner similar to the above, on the other hand, an arbitrary words image plane can be also displayed.

Although each of the above embodiments has been described with respect to the Karaoke apparatus using the LD, the invention can be also applied to a Karaoke apparatus using a VTR, other optical disk, or the like. In this instance, in case of using a VTR, it is preferable to search and reproduce a desired image plane by using a VISS such that a desired image plane is searched by using an index signal or to search and reproduce a desired image plane by using a VASS such that a desired image plane is searched by using an address signal.

According to the first aspect of the invention, even when a title list image plane or the like is not preliminarily recorded on the recording medium, a title (music title display) image plane or a words display image plane can be easily automatically formed and displayed.

According to the second aspect of the invention, image planes at a plurality of arbitrary recording positions of one image data can be simultaneously displayed as still images in the display screen of the display means.

According to the third aspect of the invention, by obtaining the recording position of the image plane data on the basis of the extraction image plane data of the recording medium, the corresponding image plane can be easily displayed.

According to the fourth aspect of the invention, further, the corresponding image planes can be automatically displayed as still images in the display means on the basis of the extraction image plane data of the recording medium.

## Claims

1. An image reproducing apparatus for reproducing image data from a recording medium on which a plurality of image data each comprising a plurality of image plane data pieces are recorded to permit access of each image plane unit by using addresses, comprising:
starting address detection means for detecting a starting address of one or a plurality of said image data in accordance with an external designation;
reproducing address detection means for detecting an address of the image plane data to be reproduced after the lapse of a previously set time period if the reproduction is performed from said starting addresses detected by said starting address detection means;
a reproducing device for respectively reproducing the image plane data of one image plane as display image plane data from one or a plurality of said reproducing address detected by said reproducing address detection means;
memory means for storing said display image plane data reproduced by said reproducing device; and
display control means for producing a video signal to display various kinds of display image planes in a display screen of a display device on the basis of one or a plurality of said display image plane data stored in said memory means.

2. An image reproducing apparatus for reproducing image data from a recording medium on which a plurality of image data each comprising a plurality of image plane data pieces are recorded to permit access of the image plane unit using addresses, comprising:
starting address detection means for detecting a starting address of one of said image data in accordance with an external designation;
timing setting means for respectively setting a plurality of reproduction timing periods corresponding to elapsed times in a normal reproducing mode from said starting address on the basis of a command from the outside;
reproducing address detection means for detecting an address of image plane data to be reproduced after the lapse of each of said reproduction timing periods if the reproduction is performed from said starting address detected by said detection means;
a reproducing device for respectively reproducing the image plane data of one image plane as display image plane data from said plurality of reproducing addresses detected by said reproducing address detection means;
memory means for storing the display image plane data reproduced by said reproducing device; and
display control means for producing a video signal to display various kinds of display image planes in a display screen of a display device on the basis of said plurality of display image plane data stored in said memory means.

3. A recording medium on which a plurality of image data each comprising a plurality of image plane data are recorded to permit access of each image plane unit by using addresses,
wherein among said plurality of image plane data, extraction image plane data indicative of one or a plurality of preset image plane data addresses to be extracted and displayed has been recorded.

4. A recording medium according to claim 3, wherein said extraction image plane data is stored by sub-codes.

5. An image reproducing apparatus for reproducing image information from a recording medium on which a plurality of image data each comprising a plurality of image plane data pieces are recorded to permit access of each image plane unit by using addresses and on which extraction image plane data indicative of the address of one or a plurality of preset image plane data to be extracted and displayed in said image plane data is recorded, comprising:
a reproducing device for respectively reproducing the image plane data of one image plane as display image plane data from the address based on the extraction image plane data;
memory means for storing the display image plane data reproduced by said reproducing device; and
display control means for producing a video signal to display various kinds of display image planes in a display screen of a display device on the basis of one or a plurality of said display image plane data stored in said memory means.

6. An apparatus according to any one of claims 1, 2, and 5, wherein the display device further performs various kinds of displays on the basis of said video signal.

7. An apparatus according to claim 1, wherein said predetermined time is a time which is equal to or longer than one second and is equal to or shorter than five seconds.

8. An apparatus according to any one of claims 1, 2, and 5, wherein said reproducing device is a laser disc player or a video tape player.

9. An apparatus according to any one of claims 1, 2, and 5, wherein the image plane data of one image plane which is reproduced by said reproducing device is data of one field or one frame.

10. An apparatus according to any one of claims 1, 2, and 5, wherein said display control means has an image plane composing circuit for respectively reducing and composing said plurality of display image plane data and for performing a multi-image plane display.

11. An apparatus according to claim 1 or 5, wherein said display control means has a multiplexing circuit for multiplexing data regarding said image data to said display image plane data.

12. An apparatus according to claim 1 or 5, wherein said display control means has an image plane composing circuit for superimposing and composing preselected data among one or a plurality of said display image plane data stored in the memory means into an image which is at present being reproduced.

13. An apparatus according to any one of claims 1, 2, and 5, wherein said image data is Karaoke data.

14. A recording medium according to claim 3, wherein said image data is Karaoke data.

15. An image reproducing method of reproducing image data from a recording medium on which a plurality of image data each comprising a plurality of image plane data are recorded to permit access of each image unit by using addresses, comprising:
a detecting step of detecting a starting address or addresses of one or a plurality of said image data in accordance with an external designation;
an address detecting step of detecting an address of the image plane data to be reproduced after the lapse of a previously set time period as a reproducing address if the reproduction is performed from the starting address detected by said detecting step;
a reproduction step of respectively reproducing the image plane-data of one image plane as display image plane data from one or a plurality of reproducing addresses detected by said reproducing address detecting step;
a memory step of storing the display image plane data reproduced by said reproduction step; and
a step of producing a video signal to display various kinds of display image planes in a display screen of a display device on the basis of one or a plurality of display image plane data stored in said memory step.

16. An image reproducing method of reproducing image data from a recording medium on which a plurality of image data each comprising a plurality of image plane data are recorded to permit access of each image plane unit by addresses, comprising:
a detecting step of detecting a starting address of one of said image data in accordance with an external designation;
a step of respectively setting a plurality of reproduction timing periods corresponding to the elapsed times in a normal reproducing mode from said starting addresses on the basis of a command from the outside;
an address detecting step of detecting an address of the image plane data to be reproduced after the lapse of each of said reproduction timing periods if the reproduction is performed from the starting address detected by said detecting step;
a step of respectively reproducing the image plane data of one image plane as display image plane data from the plurality of reproducing addresses detected by said address detecting step;
a memory step of storing the display image plane data reproduced by said reproduction step; and
a step of producing a video signal to display various kinds of display image planes in a display screen of a display device on the basis of said plurality of display image plane data stored in said memory step.

17. An image reproducing method of reproducing image data from a recording medium on which a plurality of image data each comprising a plurality of image plane data are recorded to permit access of each image plane unit by using addresses and on which extraction image plane data indicative of an address of one or a plurality of preset image plane data to be extracted and displayed are recorded, comprising:
a reproduction step of respectively reproducing the image plane data of one image plane as display image plane data from an address based on said extraction image plane data;
a step of storing the display image plane data reproduced in said reproduction step; and
a step of producing a video signal to display various kinds of display image planes in a display screen of a display device on the basis of one or a plurality of said display image plane data stored in said memory step.
